# EUROPEAN PATENT SPECIFICATION

(11) **EP 3 716 445 B1**
(45) Date of publication and mention of the grant of the patent: **07.09.2022**
(21) Application number: 19209972.9
(22) Date of filing: 19.11.2019
(51) Int. Cl.: H02K 3/18, H02K 3/52, H02K 15/06

(54) **GENERATORS AND METHODS OF MAKING GENERATORS**
GENERATOREN UND VERFAHREN ZUR HERSTELLUNG VON GENERATOREN
GÉNÉRATEURS ET PROCÉDÉS DE FABRICATION DE GÉNÉRATEURS

(30) Priority: 25.03.2019 US 201916363603
(43) Date of publication of application: 30.09.2020
(73) Proprietor: Hamilton Sundstrand Corporation, Charlotte, NC 28217-4578 (US)
(72) Inventor: COLDWATE, Joseph K., Roscoe, IL 61073 (US); PATEL, Dhaval, Loves Park, IL 61111 (US); KOENIG, Andreas C., Rockford, IL 61114 (US)
(74) Representative: Dehns

(56) References cited:
- EP-A1- 3 316 459
- US-A- 3 740 600
- US-A1- 2006 261 691
- US-A1- 2010 320 860

## Description

### BACKGROUND

The subject matter disclosed herein generally relates to generators, and more particularly to generators with rotor windings formed from flat wire.

Electrical systems, such as aircraft electrical systems, commonly include generators. The generators provide electrical power to electrical devices connected to the electrical systems during operation, typically by rotating a rotor carrying a magnetic element relative to a stator winding. As the rotor rotates relative to the stator the magnetic elements communicate magnetic flux to the stator. The magnetic flux in turn induces an electric current in the stator winding, which is harvested from the stator winding and communicated to electrical devices connected to the generator.

The magnetic elements carried by the rotor typically include permanent magnets, windings, or both permanent magnets and windings. In the case of generators employing wound field rotors, an electric excitation current is applied to the windings to generate and/or tune the magnetic flux communicated by the rotor. The windings are generally formed with a wire having a rounded or circular cross-sectional profile. The geometry of the rotor is typically selected to accommodate mechanical load exerted on the rotor by the windings during rotation as well as to limit density of the magnetic flux communicated between the magnetic elements carried and the stator winding.

Generators are disclosed in US 3,740,600, US 2006/261691 and US 2010/320860.

Such generators and methods of making generators having generally been satisfactory for their intended purpose. However, there remains a need in the art for improved generators and methods of making generators. The present disclosure provides a solution to this need.

### BRIEF SUMMARY

According to the invention a generator is provided as defined by claim 1. Further embodiments of the invention are defined in the dependent claims.

deleted

deleted

deleted

deleted

deleted

The field coil has a first axial portion abutting a first circumferential face of the rotor tooth, a second axial portion abutting a second circumferential face of the rotor tooth, the second circumferential face circumferentially separated from the first circumferential face by the rotor tooth, and end turn portion. The end turn portion couples the first axial portion to the second axial portion and is bowed radially outward of the first axial portion and the second axial portion to tightly abut the first axial segment and the second axial segment against the rotor tooth.

Further embodiments may include that the rotor tooth is a first rotor tooth and the rotor core defines a second rotor tooth circumferentially separated from the first rotor tooth by an axial slot, the generator further including a second field coil extending about the second rotor tooth, and a rotor wedge arranged in the axial slot and separating the first field coil from the second field coil.

Further embodiments may include a damper coil seated in the rotor tooth and arranged radially outward of field coil.

Further embodiments may include a shaft arranged along the rotation axis, wherein the rotor core is seated on the shaft.

Further embodiments may include that the rotor tooth is a first rotor tooth and the rotor core has a second rotor tooth separated by a gap, wherein a minimum width of gap is substantially equivalent to a width of the flat wire turn.

Further embodiments may include that the rotor tooth defines a pole arc, wherein the pole is larger than a pole arc of a rotor having an equivalent pole pitch and a field coil formed from wire having a circular profile.

Further embodiments may include that the field coil comprises twenty (20) flat wire turns stacked with one another.

According to another embodiment an electrical system is provided. The electrical system includes a generator as described above and two or more electrical devices electrically connected to the stator winding.

Further embodiments may include that the field coil comprises twenty (20) flat wire turns stacked with one another.

Further embodiments may include that the flat wire turns are stacked with one another radially relative the rotation axis; and wherein the flat wire turns are oblique relative to the rotor tooth, a first edge of the flat wire abutting the rotor tooth being arranged radially outward of an opposite second edge of the flat wire.

According to further embodiments a method of making a generator is provided as defined by claim 9.

deleted

Further embodiments may include positioning a rotor wedge on a side of the field coil opposite the tooth.

Technical effects of embodiments of the present disclosure include the capability to form rotors with large pole arc size in relation to rotors of equivalent diameter and pole count formed with wire having rounded or circular cross-sectional shapes. In certain embodiments generators described herein can communicate a given amount of magnetic flux with lower flux density owing to the relatively large pole arc in comparison to rotors of equivalent diameter and pole count. In accordance with certain embodiments, generators described herein can operate with relatively low tooth stress in comparison to generators employing rounded or circulate wire for a given rotor diameter and rotational speed, improving generator efficiency.

These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF DRAWINGS

The following descriptions should not be considered limiting in any way. With reference to the accompanying drawings, like elements are numbered alike:
FIG. 1 is a schematic view of a generator constructed in accordance with the present disclosure, showing a rotor supported for rotation relative to a stator with a stator winding connected to a plurality of electrical devices, the generator operatively associated with a gas turbine engine to provide electrical power to the electrical devices in accordance with an embodiment of the disclosure;
FIG. 2 is cross-sectional view of the rotor shown in FIG. 1, showing a field winding with field coils formed from flat wire and seated on rotor;
FIG. 3 is a cross-sectional view of a portion of the rotor of FIG. 1, showing axial portions of the field coils extending along and abutting circumferential faces of teeth defined by the rotor;
FIG. 4 is a cross-sectional view of two field coils of seated on the generator rotor of FIG. 1, showing turns formed from flat wire and stacked radially within a slot of the rotor;
FIG. 5 is a cross-sectional view of another portion of the rotor of FIG. 1, showing formed end turn portions of the field coils formed by the flat wire stack turns, the formed end turn portions bowed radially outward relative to axial portions of the field coils; and
FIG. 6 is a block diagram of a method of making a generator in accordance with the present disclosure, showing steps of the method.

### DETAILED DESCRIPTION

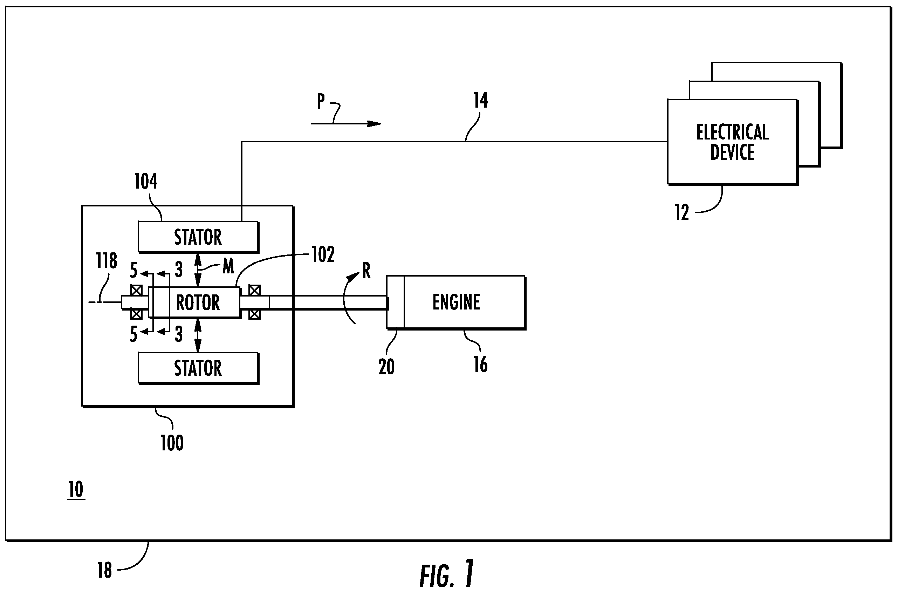

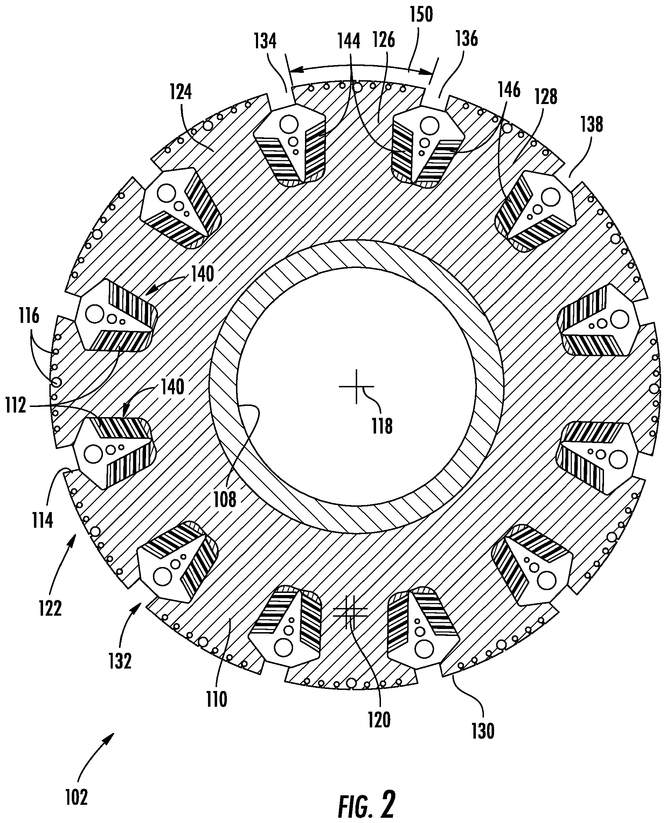

Reference will now be made to the drawings wherein like reference numerals identify similar structural features or aspects of the subject disclosure. For purposes of explanation and illustration, and not limitation, a partial view of an exemplary embodiment of a generator in accordance with the present disclosure is shown in FIG. 1 and is designated generally by reference character 100. Other embodiments of generators, electrical systems, and methods of making generators in accordance with the present disclosure, or aspects thereof, are provided in FIGS. 2-6, as will be described. The systems and methods described herein can be used for generating electrical power in aircraft electrical systems, such as in variable-frequency constant-frequency (VFCF) operatively associated with aircraft main engines and/or auxiliary power units, though the present disclosure is not limited the VFCF generators, aircraft electrical systems, or to generator-type electric machines in general.

Referring to FIG. 1, an electrical system 10, e.g., an aircraft electrical system, is shown. The electrical system 10 includes a plurality of electrical devices 12, a power bus 14, and the generator 100. The power bus 14 connects the plurality of electrical devices 12 to the generator 100. The generator 100 includes a rotor 102 supported for rotation about a rotation axis 118 relative to a stator 104 and configured to generate electrical power P using a stator winding 106 supported by the stator 104 and connected to the power bus 14, which the power bus 14 provides to the plurality of electrical devices 12 using rotation R communicated to the rotor 102 of the generator 100. As shown in FIG. 1 the rotor 102 is operatively associated with an engine 16, e.g., a main engine or an auxiliary power unit carried by an aircraft 18, and receives the mechanical rotation R through an accessory gearbox 20. Although shown and described herein as an aircraft electrical system 10, it is to be understood and appreciated that other types of electrical systems can also benefit from the present disclosure.

With reference to FIG. 2, the rotor 102 is shown. The rotor 102 includes a shaft 108, a rotor core 110, and a field winding 112. The rotor 102 also includes rotor wedges 114 and a damper winding 116. The shaft 108 arranged along a rotation axis 118 and is supported along the rotation axis 118 for rotation relative the stator 104 (shown in FIG. 1). As shown in FIG. 2 the shaft 108 is hollow and extends radially about the rotation axis 118.

The rotor core 110 is seated on the shaft 108, extends circumferentially about the shaft 108, and is fixed in rotation relative to the shaft 108 for common rotation therewith about the rotation axis 118. The rotor core 110 is formed from a magnetic material 120 for communicating magnetic flux between the rotor 102 and the stator 104 (shown in FIG. 1), such as magnetic steel. In certain embodiments the rotor core 110 includes a plurality of steel laminations axially stacked with one another along the rotation axis 118. This is for illustration purposes only and is non-limiting. As will be appreciated by those of skill in the art in view of the present disclosure, rotor 102 can be formed from sintered metallic powder or a monolithic forging, as suitable for an intended application.

The rotor core 110 has a plurality of rotor teeth 122, e.g., a first rotor tooth 124, a second rotor tooth 126, and a third rotor tooth 128. The plurality of rotor teeth 122 are circumferentially distributed about a radially outer periphery 130 of the rotor core 110. A plurality of axial gaps 132, e.g., a first axial gap 134 and a second axial gap 136, are defined about the radially outer periphery 130 and separate circumferentially adjacent teeth of the plurality of rotor teeth 122. In this respect the first axial gap 134 separates the first rotor tooth 124 from the second rotor tooth 126, and the second axial gap 136 separates the second rotor tooth 126 from the third rotor tooth 128.

The field winding 112 is supported by the rotor 102, is fixed in rotation relative to the rotor core 110, and is arranged about the radially outer periphery 130 of the rotor 102. The field winding 112 includes a plurality of field coils 140, e.g., a first field coil 144 and a second field coil 146, seated in the plurality of axial gaps 132 defined by the rotor core 110 and extending about respective teeth of the plurality of rotor teeth 122. The plurality of filed coils 140 are connected electrically in series with one another and are to magnetize portions of the rotor core 110 into a plurality of magnetic poles when current flows through the field winding 112 for generating the magnetic flux M (shown in FIG. 1).

The first field coil 144 extends about the first rotor tooth 124 and is disposed partially in the first axial gap 134 and the second axial gap 136. The first field coil 144 is electrically connected to the field winding 112 such that electric current flowing through the first coil magnetizes the first rotor tooth 120. This defines a first of the magnetic poles, the first rotor tooth 120 thereby communicating magnetic flux M (shown in FIG. 1) to the stator 104 across a pole arc 150 defined by the first rotor tooth 124. The second field coil 146 is similar to the first field coil 144 and additionally extends about the second rotor tooth 126, is disposed partially in the second axial gap 136 and the third axial gap 138, and defines a second magnetic pole when current flows through the field winding 112. As shown in FIG. 2 the field winding 112 includes twelve (12) field coils 140. The twelve (12) field coils 140 in turn, when current is applied to the field winding 112, define twelve (12) magnetic poles which are distributed circumferentially about the radially outer periphery 130 of the rotor 102. The twelve (12) poles allow the generator 100 to cooperate with power conversion electronics arranged to condition the voltage waveform output from 12-pole generators while enjoying relatively low flux density and/or higher power density provided by the generator 100, as will be described.

As will be appreciated by those of skill in the art in view of the present disclosure, the construction of field windings in electric machines can influence both the mechanical stress exerted on the rotor structure and the characteristics of magnetic flux communicated in electric machines. For example, gaps between rotor teeth typically must be sized to allow the field winding to be installed in the electric machine rotor. The size of the gaps between adjacent rotor teeth cooperates with the pole count and rotor diameter to determine both the geometry of the rotor teeth and the pole arc size in the electric machine.

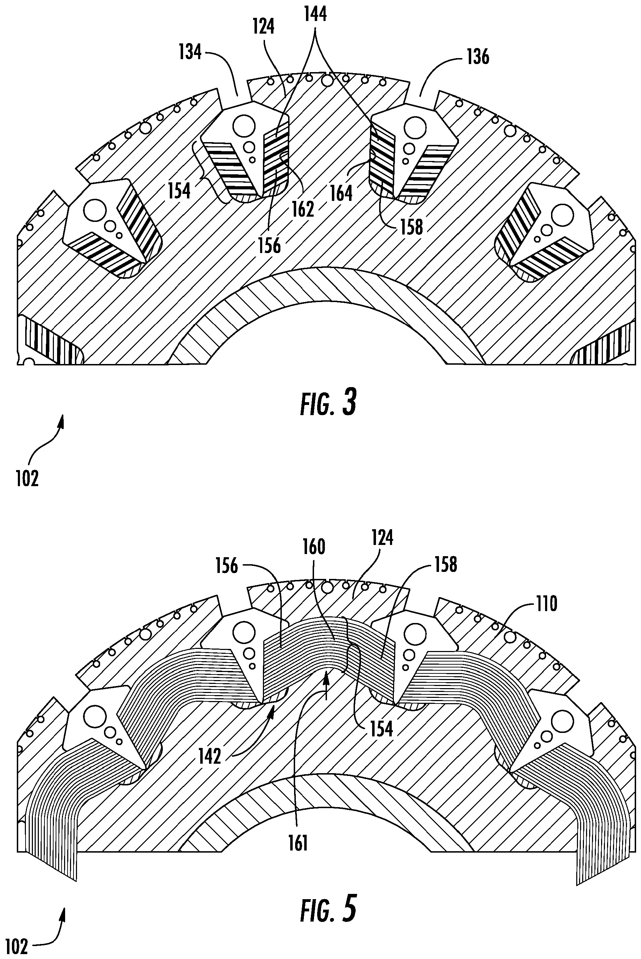

As will also be appreciated by those of skill in the art in view of the present disclosure, pole arc size influences magnetic flux density, the maximum amount of magnetic flux linking the rotor and stator in the electric machine, and/or the shape of the voltage waveform associated with the magnetic flux communicated between the stator and rotor in the electric machine. Applicant has determined that employment field windings constructed from flat wire turns 154 (shown in FIG. 3), in contrast to the rounded (e.g., circular) wires typically employed in field windings, can limit the amount of stress exerted on the rotor teeth in relation to turns formed from wire having round or circular shapes. Flat wire can also allow for rotor poles to have relatively large pole arc size in comparison to turns formed from wire having round or circular shapes, limiting the density of magnetic flux communicated between the rotor and stator. Limited flux density can in turn increase the power density of the generator compared to generators employing wire having rounded or circular shapes and/or improve characteristics of the voltage waveform associated with the magnetic flux communicated between the rotor and the stator in such generators.

With reference to FIG. 3, a portion of the rotor 102 including the flat wire turns 154 is shown. Each of the plurality of field coils 140 forming the field coil 112 (shown in FIG. 2) include two axial portions and an end turn portion. In this respect the first field coil 144 includes a first axial portion 156 and a second axial portion 158 coupled to one another by an end turn portion 160 (shown in FIG. 5).

The first axial portion 156 is arranged in the first axial gap 134 and circumferentially abuts the first rotor tooth 124. More specifically, the first axial portion 156 abuts a first circumferential face 162 of the first rotor tooth 124 and is defined by the flat wire turns 154. The second axial portion 158 is similar to the first axial portion 156 and is additionally arranged in the second axial gap 136 such that the second axial portion 158 also abuts the first rotor tooth 124 along a second circumferential face 164, the second circumferential face 164 located on a side of the first rotor tooth 124 circumferentially opposite the first circumferential face 162.

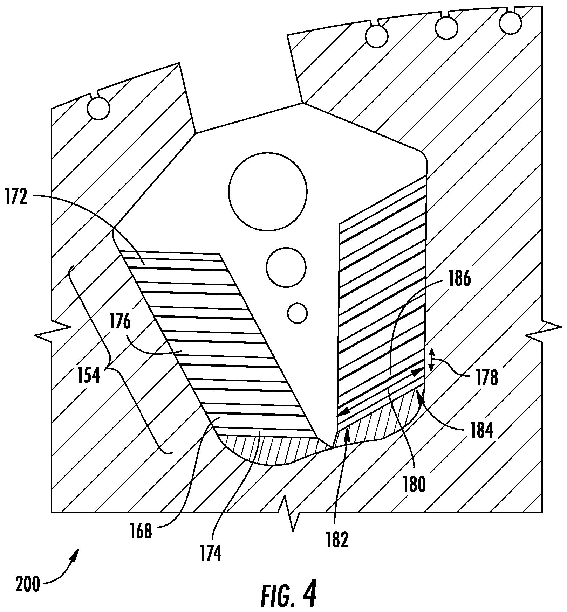

With reference to FIG. 4, the flat wire turns 154 include a plurality of flat wires 168 radially stacked to form a flat wire turn stack 170. In this respect the first axial portion 152 of the first field coil 142 includes a radially outer flat wire 172 radially stacked with a radially inner flat wire 174 and a radially intermediate flat wire 176 in the flat wire turn stack 170. The radially outer flat wire 172 defines an axial profile with a height 178 and a width 180, the width 180 being larger than the height 178 of the radially outer flat wire 172. In certain embodiments the radially outer flat wire 172 has a substantially rectangular axial profile 186, two corners of the substantially rectangular axial profile 186 being acute and two corners of the substantially rectangular axial profile being obtuse. The radially inner flat wire 166 and the radially intermediate flat wire 176 are similar to the radially outer flat wire 172, and are arranged such that widths of each are substantially parallel to the width 180 of the radially outer flat wire 172.

The radially outer flat wire 172 is angled relative to the first rotor tooth 124. More specifically, the radially outer flat wire 172 is angled obliquely relative to a radial axis defined by the first rotor tooth 124 such that a first end 182 of the axial profile abutting the first rotor tooth 124 is located radially outward of an opposite second end 184 of the radially outer flat wire 172. The radially inner flat wire 166 and the radially intermediate flat wire 176 are similarly angled relative to the first rotor tooth 124, which aligns the first axial portion 152 with the end turn portion 160 of the first field coil 144. As shown in FIG. 5, the first axial portion 152 of the first field coil 144 is one wire wide, i.e., a single flat wire circumferentially interposed between the rotor wedge 114 and the first rotor tooth 124. As also shown in FIG. 5 the flat wire turn stack 170 includes twenty (20) flat wires, which provided electrical resistance commensurate with coils formed from wires having a cylindrical profile in a generator having a rotor of similar diameter.

With reference to FIG. 5, the end turn portion 160 is shown. The end turn portion 160 circumferentially spans the first rotor tooth 124 and couples the first axial portion 156 of the first field coil 144 (shown in FIG. 4) to the second axial portion 158 (shown in FIG. 4) of the first field coil 144 (shown in FIG. 3). Further, the end turn portion 160 is bowed 161 radially outward from the first axial portion 152 and the second axial portion 158. In this respect the end turn portion 160 traces an arcuate path including the flat wire turns 154 of the flat wire turn stack 170 that circumferentially couples the second axial portion 158 to the first axial portion of the first field coil 142. It is contemplated that the bow 161 be introduced subsequent to installation of the first field coil 142 in the rotor core 110, in a forming operation, the forming operation and associated bow 161 tightening the first field coil 142 against the first rotor tooth 124. Each of the plurality of the field coils 140 are similar in this respect, axial portions of each of the plurality of the field coils 140 are coupled by a respective end turn portion. As will be appreciated by those of skill in the art in view of the present disclosure, the forming operation loads the field coils in tension, tightens the field coils against tooth the field coil extends about, and increase the resistance to centrifugal force that the circumferential faces of the tooth exerted on the field coil by the tooth.

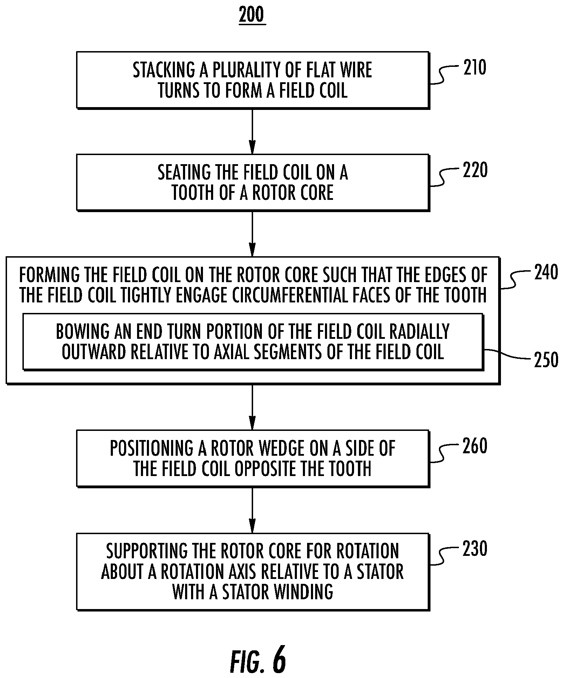

With reference to FIG. 6, a method 200 of making a generator, e.g., the generator 100 is shown. As shown with box 210, a plurality of flat wire turns, e.g., the flat wire turns 154 (shown in FIG. 3), are stacked with one another to form a field coil, e.g., the first field coil 142. The field coil is then seated on a rotor tooth of a rotor for a generator, e.g., the first rotor tooth 124 (shown in FIG. 2) of the rotor 102 (shown in FIG. 1), as shown with box 220. The rotor is then supported for rotation along a rotation axis, e.g., the rotation axis 118 (shown in FIG. 2), as shown with box 230. It is contemplated that the rotor be supported for rotation relative to stator with a winding, e.g., the stator 104 (shown in FIG. 1) with the stator winding 106 (shown in FIG. 1), as also shown with box 230.

It is contemplated that the field coil undergo a forming operation such that edges of the field coil tightly abut circumferential faces of the rotor tooth, as shown with box 240. The forming of the field coil includes bowing the field coil such that an end turn portion, e.g., the end turn portion 160 (shown in FIG. 5), of the field coil extends radially outward from axial segments of the field coil, e.g., the first axial portion 152 (shown in FIG. 3) and the second axial portion 158 (shown in FIG. 3), as shown with box 250. As shown with box 260, a rotor wedge, e.g., the rotor wedge 114 (shown in FIG. 2), is positioned on a side of the field coil opposite the rotor tooth.

Field coils for generators can be formed with wires having circular cross-sections. The circular cross-section of the wire forming the field coils influence the pole arc of generator rotors including the field coils, the pole arc in turn being a factor in density of flux communicated between the rotor and the stator. The pole arc in turn can also influence the peak magnetic flux that can be communicated between the rotor and the stator and rotor construction due to the stress associated with the field winding placement and shape.

According to the claimed invention, field coils include flat wire turns stacked with one another. The flat wire turns allow the pole arc defined by the rotor to be relatively large for a given pole count and rotor diameter, limiting density of magnetic flux communicated by the rotor and providing relatively high peak magnetic flux communication capability and/or improving quality of the voltage waveform associated with the magnetic flux communicated between the rotor and stator. Field coils are formed such that field coil end turns are bowed radially outward relative to axial portions of the field coils, tightening the field coils against the teeth about which the respective field coil is seated. It is also contemplated that the field coils can have a width such that the field coils can be installed over the tooth tips that define the relatively large pole arcs of the rotor teeth.

The term "about" is intended to include the degree of error associated with measurement of the particular quantity based upon the equipment available at the time of filing the application. For example, "about" can include a range of ± 8% or 5%, or 2% of a given value.

As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the invention as defined by the claims,

## Claims

1. A generator, comprising:
a stator (104) with a stator winding (106);
a rotor core (110) supported for rotation relative to the stator about a rotation axis (118), the rotor core having one or more axially extending rotor tooth (122); and
a field winding (112) with one or more field coil (140) seated on the rotor core and extending about the rotor tooth, wherein the field coil includes a plurality of flat wire turns (154) radially stacked with one another and formed such that edges of the field
coil tightly engage circumferential faces of the tooth; wherein
the flat wire has an axial profile with a height (178) and a width (180), wherein the width of the flat wire (168) is greater than the height of the flat wire; , and wherein
the flat wire has an axial profile that is rectangular in shape; wherein a flat wire turn stack (170) defined by a plurality of flat wire turns (154) is one flat wire-width wide; and **characterised in that**:
the flat wire turns (154) are oblique relative to the rotor tooth (122), a first edge of the flat wire abutting the rotor tooth (122) being arranged radially outward of an opposite second edge of the flat wire; and
the field coil (140) comprises:
a first axially extending portion (156) abutting a first circumferential face (162) of the rotor tooth (122);
a second axially extending portion (158) abutting a second circumferential face (164) of the rotor tooth, the second circumferential face circumferentially separated from the first circumferential face by the rotor tooth; and
an end turn portion (160) coupling the first axially extending portion to the second axially extending portion, wherein the end turn portion is bowed (161) radially outward of the first axially extending portion and the second axially extending portion to tightly abut the first axial segment and the second axial segment against the rotor tooth, such that the end turn portion (160) traces an arcuate path including the flat wire turns (154) of the flat wire turn stack (170) that circumferentially couples the second axially extending portion to the first axially extending portion of the first field coil (142); and
wherein the field winding comprises twelve field coils circumferentially distributed about a periphery of the rotor core, to define twelve magnetic poles distributed circumferentially about the radially outer periphery (130) of the rotor (120).

2. The generator as recited in claim 1, wherein the field coil comprises twenty flat wire turns stacked with one another.

3. The generator as recited in any preceding claim, wherein the rotor tooth is a first rotor tooth and the rotor core defining a second rotor tooth circumferentially separated from the first rotor tooth by an axial slot, the generator further comprising:
a second field coil extending about the second rotor tooth; and
a rotor wedge (114) arranged in the axial slot and separating the first field coil from the second field coil, or wherein the rotor tooth is a first rotor tooth and the rotor core has a second rotor tooth separated by a gap (134), wherein a minimum width of the gap is substantially equivalent to a width of the flat wire turns.

4. The generator as recited in any preceding claim, further comprising a damper coil (116) seated in the rotor tooth and arranged radially outward of field coil.

5. The generator as recited in any preceding claim, further comprising a shaft (108) arranged along the rotation axis, wherein the rotor core is seated on the shaft.

6. The generator as recited in any preceding claim, wherein the rotor tooth defines a pole arc, wherein the pole is larger than a pole arc of a rotor having an equivalent pole pitch and a field coil formed from wire having a circular profile.

7. An electrical system, comprising:
a generator (100) as recited in any preceding claim, wherein
a plurality of electrical devices (12) are electrically connected to the stator winding.

8. The electrical system as recited in claim 7, wherein the field coil comprises twenty flat wire turns stacked with one another, and/or wherein the flat wire turns are stacked with one another radially relative the rotation axis; and wherein the flat wire turns are oblique relative to the rotor tooth, a first edge of the flat wire abutting the rotor tooth being arranged radially outward of an opposite second edge of the flat wire.

9. A method of making a generator as claimed in any of claims 1 - 6, comprising:
stacking the plurality of flat wire turns (154) to form the field coil (140);
seating the field coil on the rotor tooth (122) of the rotor core (110);
forming the field coil on the rotor core such that the edges of the field coil tightly engage the first and second circumferential faces of the rotor tooth; and
supporting the rotor core for rotation about the rotation axis (118) relative to the stator (104) with the stator winding (106);
wherein forming the field coil comprises bowing the end turn portion (160) of the field coil (140) radially outward relative to axial
segments of the field coil.

10. The method as recited in claim 9, further comprising positioning a rotor wedge on a side of the field coil opposite the tooth.

## Patentansprüche

1. Generator, umfassend:
einen Stator (104) mit einer Statorwicklung (106);
einen Rotorkern (110), der zur Drehung relativ zum Stator um eine Drehachse (118) gelagert ist, wobei der Rotorkern einen oder mehrere sich axial erstreckende Rotorzähne (122) aufweist; und
eine Feldwicklung (112) mit einer oder mehreren Feldspulen (140), die auf dem Rotorkern sitzen und sich um den Rotorzahn erstrecken, wobei die Feldspule mehrere Flachdrahtwindungen (154) umfasst, die radial übereinander gestapelt und so ausgebildet sind, dass Kanten der Feldspule eng an die Umfangsflächen des Zahns eingreifen; wobei
der Flachdraht ein axiales Profil mit einer Höhe (178) und einer Breite (180) aufweist, wobei die Breite des Flachdrahts (168) größer als die Höhe des Flachdrahts ist; und wobei der Flachdraht ein axiales Profil aufweist, das eine rechteckige Form aufweist; wobei ein Flachdrahtwindungsstapel (170), der durch eine Vielzahl von Flachdrahtwindungen (154) definiert ist, eine Flachdrahtbreite breit ist; und **dadurch gekennzeichnet, dass**:
die Flachdrahtwindungen (154) relativ zum Rotorzahn (122) schräg verlaufen, wobei eine erste Kante des Flachdrahts, die am Rotorzahn (122) anliegt, radial außerhalb einer entgegengesetzten zweiten Kante des Flachdrahts angeordnet ist; und
die Feldspule (140) umfasst:
einen ersten sich axial erstreckenden Abschnitt (156), der an einer ersten Umfangsfläche (162) des Rotorzahns (122) anliegt;
einen zweiten sich axial erstreckenden Abschnitt (158), der an einer zweiten Umfangsfläche (164) des Rotorzahns anliegt, wobei die zweite Umfangsfläche in Umfangsrichtung von der ersten Umfangsfläche durch den Rotorzahn getrennt ist; und
einen Endwindungsabschnitt (160), der den ersten sich axial erstreckenden Abschnitt mit dem zweiten sich axial erstreckenden Abschnitt koppelt, wobei der Endwindungsabschnitt von dem ersten sich axial erstreckenden Abschnitt und dem zweiten sich axial erstreckenden Abschnitt radial nach außen gebogen (161) ist, um das erste axiale Segment und das zweite axiale Segment eng an dem Rotorzahn anliegen zu lassen, sodass der Endwindungsabschnitt (160) einem bogenförmigen Pfad folgt, der die Flachdrahtwindungen (154) des Flachdrahtwindungsstapels (170) enthält, der den zweiten sich axial erstreckenden Abschnitt mit dem ersten sich axial erstreckenden Abschnitt der ersten Feldspule (142) in Umfangsrichtung koppelt; und
wobei die Feldwicklung zwölf Feldspulen umfasst, die in Umfangsrichtung um einen Umfang des Rotorkerns verteilt sind,
um zwölf Magnetpole zu definieren, die in Umfangsrichtung um den radial äußeren Umfang (130) des Rotors (120) verteilt sind.

2. Generator nach Anspruch 1, wobei die Feldspule zwanzig übereinander gestapelte Flachdrahtwindungen umfasst.

3. Generator nach einem der vorhergehenden Ansprüche, wobei der Rotorzahn ein erster Rotorzahn ist und der Rotorkern einen zweiten Rotorzahn definiert, der in Umfangsrichtung von dem ersten Rotorzahn durch einen axialen Schlitz getrennt ist, wobei der Generator ferner umfasst:
eine zweite Feldspule, die sich um den zweiten Rotorzahn herum erstreckt; und
einen Rotorkeil (114), der in dem axialen Schlitz angeordnet ist und die erste Feldspule von der zweiten Feldspule trennt, oder wobei der Rotorzahn ein erster Rotorzahn ist und der Rotorkern einen zweiten Rotorzahn aufweist, die durch einen Spalt (134) getrennt sind, wobei eine minimale Breite des Spalts im Wesentlichen äquivalent zu einer Breite der Flachdrahtwindungen ist.

4. Generator nach einem der vorhergehenden Ansprüche, ferner umfassend eine Dämpferspule (116), die in dem Rotorzahn sitzt und radial außerhalb der Feldspule angeordnet ist.

5. Generator nach einem der vorhergehenden Ansprüche, ferner umfassend eine Welle (108), die entlang der Drehachse angeordnet ist, wobei der Rotorkern auf der Welle sitzt.

6. Generator nach einem der vorhergehenden Ansprüche, wobei der Rotorzahn einen Polbogen definiert, wobei der Pol größer ist als ein Polbogen eines Rotors mit einer äquivalenten Polteilung und einer Feldspule, die aus Draht mit einem kreisförmigen Profil ausgebildet ist.

7. Elektrisches System, umfassend:
einen Generator (100) nach einem der vorhergehenden Ansprüche, wobei
mehrere elektrische Vorrichtungen (12) mit der Statorwicklung elektrisch verbunden sind.

8. Elektrisches System nach Anspruch 7, wobei die Feldspule zwanzig übereinander gestapelte Flachdrahtwindungen umfasst und/oder wobei die Flachdrahtwindungen radial zur Drehachse übereinander gestapelt sind und wobei die Flachdrahtwindungen relativ zu dem Rotorzahn schräg verlaufen, wobei eine erste Kante des Flachdrahts, die an dem Rotorzahn anliegt, radial außerhalb einer entgegengesetzten zweiten Kante des Flachdrahts angeordnet ist.

9. Verfahren zur Herstellung eines Generators nach einem der Ansprüche 1-6, umfassend:
Stapeln der Vielzahl von Flachdrahtwindungen (154), um die Feldspule (140) auszubilden;
Setzen der Feldspule auf den Rotorzahn (122) des Rotorkerns (110) ;
Ausbilden der Feldspule auf dem Rotorkern derart, dass die Kanten der Feldspule eng an der ersten und zweiten Umfangsfläche des Rotorzahns eingreifen; und
Stützen des Rotorkerns zur Drehung um die Drehachse (118) relativ zum Stator (104) mit der Statorwicklung (106);
wobei das Ausbilden der Feldspule das Biegen des Endwindungsabschnitts (160) der Feldspule (140) radial nach außen relativ zu axialen Segmenten der Feldspule umfasst.

10. Verfahren nach Anspruch 9, ferner umfassend das Positionieren eines Rotorkeils auf einer dem Zahn entgegengesetzten Seite der Feldspule.

## Revendications

1. Générateur, comprenant :
un stator (104) avec un enroulement de stator (106) ;
un noyau de rotor (110) supporté pour une rotation par rapport au stator autour d'un axe de rotation (118), le noyau de rotor ayant une ou plusieurs dents de rotor s'étendant axialement (122) ; et
un enroulement de champ (112) avec une ou plusieurs bobines de champ (140) placées sur le noyau de rotor et s'étendant autour de la dent de rotor, dans lequel la bobine de champ comporte une pluralité de spires de fil plat (154) empilées radialement les unes avec les autres et formées de sorte que les bords de la bobine de champ viennent en prise étroite avec les faces circonférentielles de la dent ; dans lequel
le fil plat a un profil axial avec une hauteur (178) et une largeur (180), dans lequel la largeur du fil plat (168) est supérieure à la hauteur du fil plat ; , et dans lequel le fil plat présente un profil axial de forme rectangulaire ;
dans lequel une pile de spires de fil plat (170) définie par une pluralité de spires de fil plat (154) a une largeur de fil plat ;
et **caractérisé en ce que** :
les spires de fil plat (154) sont obliques par rapport à la dent de rotor (122), un premier bord du fil plat venant en butée contre la dent de rotor (122) étant agencé radialement vers l'extérieur d'un second bord opposé du fil plat ;
et
la bobine de champ (140) comprend :
une première partie s'étendant axialement (156) venant en butée contre une première face circonférentielle (162) de la dent de rotor (122) ;
une seconde partie s'étendant axialement (158) venant en butée contre une seconde face circonférentielle (164) de la dent de rotor, la seconde face circonférentielle étant séparée circonférentiellement de la première face circonférentielle par la dent de rotor ; et
une partie de spire terminale (160) couplant la première partie s'étendant axialement à la seconde partie s'étendant axialement, dans lequel la partie de spire terminale est courbée (161) radialement vers l'extérieur de la première partie s'étendant axialement et la seconde partie s'étendant axialement pour venir en butée étroite avec le premier segment axial et le second segment axial contre la dent de rotor, de sorte que la partie de spire terminale (160) trace un chemin arqué comportant les spires de fil plat (154) de la pile de spires de fil plat (170) qui couple circonférentiellement la seconde partie s'étendant axialement à la première partie s'étendant axialement de la première bobine de champ (142) ; et
dans lequel l'enroulement de champ comprend douze bobines de champ réparties circonférentiellement autour d'une périphérie du noyau de rotor, pour définir douze pôles magnétiques répartis circonférentiellement autour de la périphérie radialement externe (130) du rotor (120).

2. Générateur selon la revendication 1, dans lequel la bobine de champ comprend vingt spires de fil plat empilées les unes avec les autres.

3. Générateur selon une quelconque revendication précédente, dans lequel la dent de rotor est une première dent de rotor et le noyau de rotor définissant une seconde dent de rotor séparée circonférentiellement de la première dent de rotor par une fente axiale, le générateur comprenant en outre :
une seconde bobine de champ s'étendant autour de la seconde dent de rotor ; et
une cale de rotor (114) agencée dans la fente axiale et séparant la première bobine de champ de la seconde bobine de champ, ou dans lequel la dent de rotor est une première dent de rotor et le noyau de rotor a une seconde dent de rotor séparée par un espace (134), dans lequel une largeur minimale de l'espace est sensiblement équivalente à une largeur des spires de fil plat.

4. Générateur selon une quelconque revendication précédente, comprenant en outre une bobine d'amortissement (116) placée dans la dent de rotor et agencée radialement à l'extérieur de la bobine de champ.

5. Générateur selon une quelconque revendication précédente, comprenant en outre un arbre (108) agencé le long de l'axe de rotation, dans lequel le noyau de rotor est placé sur l'arbre.

6. Générateur selon une quelconque revendication précédente, dans lequel la dent de rotor définit un arc polaire, dans lequel le pôle est plus grand qu'un arc polaire d'un rotor ayant un pas polaire équivalent et une bobine de champ formée à partir d'un fil ayant un profil circulaire.

7. Système électrique, comprenant :
un générateur (100) selon une quelconque revendication précédente, dans lequel
une pluralité de dispositifs électriques (12) sont connectés électriquement à l'enroulement de stator.

8. Système électrique selon la revendication 7, dans lequel la bobine de champ comprend vingt spires de fil plat empilées les unes avec les autres, et/ou dans lequel les spires de fil plat sont empilées les unes avec les autres radialement par rapport à l'axe de rotation ; et dans lequel les spires de fil plat sont obliques par rapport à la dent de rotor, un premier bord du fil plat venant en butée contre la dent de rotor étant agencé radialement vers l'extérieur d'un second bord opposé du fil plat.

9. Procédé de fabrication d'un générateur selon l'une quelconque des revendications 1 à 6, comprenant :
l'empilement de la pluralité de spires de fil plat (154) pour former la bobine de champ (140) ;
le placement de la bobine de champ sur la dent de rotor (122) du noyau de rotor (110) ;
la formation de la bobine de champ sur le noyau de rotor de sorte que les bords de la bobine de champ viennent en prise étroite avec les première et seconde faces circonférentielles de la dent de rotor ; et
le support du noyau de rotor pour une rotation autour de l'axe de rotation (118) par rapport au stator (104) avec l'enroulement de stator (106) ;
dans lequel la formation de la bobine de champ comprend la courbure de la partie de spire terminale (160) de la bobine de champ (140) radialement vers l'extérieur par rapport aux segments axiaux de la bobine de champ.

10. Procédé selon la revendication 9, comprenant en outre le positionnement d'une cale de rotor sur un côté de la bobine de champ opposé à la dent.
